# EUROPEAN PATENT APPLICATION

(11) **EP 2 393 289 A1**
(43) Date of publication of application: **07.12.2011**
(21) Application number: 09839130.3
(22) Date of filing: 03.12.2009
(51) Int. Cl.: H04N 5/64, G09F 9/00

(54) **DISPLAY UNIT**

(30) Priority: 29.01.2009 JP 2009017552
(71) Applicant: Panasonic Corporation, Kadoma-shi Osaka 571-8501 (JP)
(72) Inventor: SATO, Yuya, Chuo-ku Osaka 540-6207 (JP)
(74) Representative: Grünecker, Kinkeldey, Stockmair & Schwanhäusser
(86) International application number: PCT/JP2009/006576
(87) International publication number: WO 2010/086938

(57) **Abstract**

A display unit has a metal fitting that has a minimum-required shape and size for maintaining the physical strength and electrical performance of the display unit. Parts other than the metal fitting are formed of a resin chassis frame. The resin chassis frame, lighter and thinner than a metal chassis, is adopted, because an insulating space can be eliminated while maintaining the safety and durability.

## Description

### TECHNICAL FIELD

The present invention relates to mechanisms of display units that display images. In particular, the present invention relates resin chassis frames formed of resin and metal fittings installed on a rear face of panel.

### BACKGROUND ART

A conventional liquid crystal display unit has a metal frame on a rear face of liquid crystal display panel, and a substrate is provided on a rear face of this metal frame (also called a chassis frame). A rear cover is provided on a rear face of this substrate (Patent Literature 1). This chassis frame is a component for attaching and reliably fixing the substrate inside the display unit.

Slimming of display units is increasingly demanded with consideration to the appearance quality. Still more, installation of display unit on a wall is proposed in addition to conventional installation of disposing a display unit on a flat surface, typically on a television stand. Still more, a lighter display unit is also demanded. Furthermore, more inexpensive display unit is demanded in addition to these demands for slim and light display units. Accordingly, manufacturing costs of display unit need to be reduced.

The conventional liquid crystal display unit includes a chassis frame formed of metal material, and thus the display unit is extremely heavy. This hinders weight reduction. In general, metal density is typically 7870 kg/m³ for SECC. On the other hand, resin density is 1155 kg/m³ in case of flame retardant PS. If these two materials are compared, the metal density is about seven times greater. Therefore, the use of metal hinders weight reduction.

Another disadvantage is that the chassis frame of conventional liquid crystal display unit is formed of metal material, and an end face of metal is generally edged. This leads to a sharp metal end face, and thus jacket of lead wire arranged inside the display unit may get damaged if the lead wire touches the edge, causing possible unsafe state. Conventionally, a wire barrier is provided as required to solve this disadvantage. In addition, there are many portions that require this barrier. A complicated shape is also needed to suit each structure. Accordingly, provision of this structure increases manufacturing costs. More specifically, a metal chassis frame requires a flange for fixing a substrate, and an end face of this flange is also edged, generating the above-described disadvantage.

Another disadvantage is the need to insulate the chassis frame and high-voltage components on the substrate if the chassis frame is formed of metal material in the conventional liquid crystal display unit. This means that a certain space (insulating distance) needs to be generally secured between the chassis frame and the high-voltage component. However, the need for this insulating distance impedes slimming of display unit. Alternatively, an insulating barrier may be provided between the chassis frame and high-voltage components. However, this structure increases the number of components and manufacturing costs.

Sill another disadvantage is that if the chassis frame is formed of metal in the conventional liquid crystal display unit, its shape is limited since a metal component is generally punched out from or made by bending a flat plate. Accordingly, once the shape of chassis frame is determined, it is difficult to change its shape so as to adjust fitting. In addition, a die modification cost is needed for changing the shape of chassis frame. This also increases manufacturing costs. In addition, fine adjustment in a plate-thickness direction is extremely difficult from technical aspect. Accordingly, fitting needs to be adjusted among multiple components. This also increases the time and manufacturing costs.

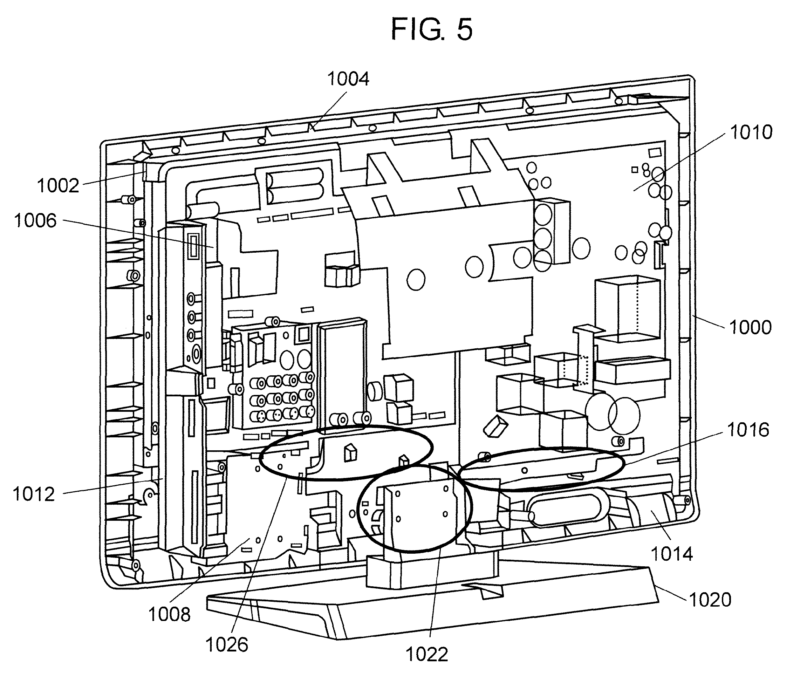

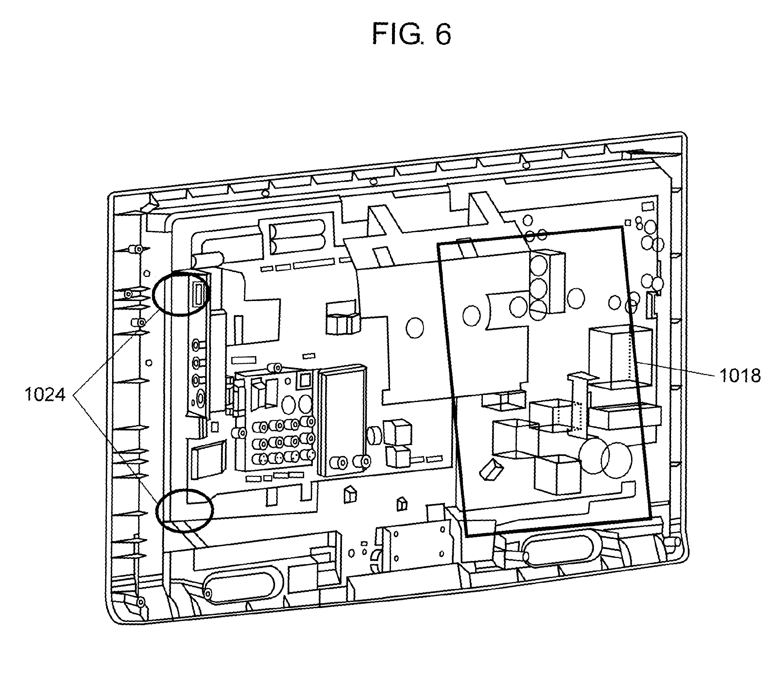

Next, a structure of the conventional display unit is further detailed with reference to Figs. 5 and 6. As shown in Figs. 5 and 6, the conventional display unit includes metal chassis frame 1004, first substrate 1006, second substrate 1008, third substrate 1010, first retention mechanism (side bracket) 1012, second retention mechanism (AC bracket) 1014, protection mechanism (wire barrier) 1016, insulation barrier 1018, cut powder barrier 1022, screw 1024, and third retention mechanism (clamper) 1026.

Metal chassis frame 1004 is disposed on a rear face of cabinet 1000, which is a casing of display unit, and is provided on a rear face of display panel 1002 that displays images. Metal chassis frame 1004 is formed of metal material, and holds display panel 1002. First substrate 1006, second substrate 1008, and third substrate 1010 are installed on metal chassis frame 1004, and multiple circuits are built in. First retention mechanism (side bracket) 1012 retains first substrate 1006, second substrate 1008, third substrate 1010, and a terminal for connecting the display unit and external equipment. Second retention mechanism (AC bracket) 1014 retains first retention mechanism (side bracket) 1012 and a power cord for inputting power source to the display unit. Protection mechanism (wire barrier) 1016 protects wiring inside the display unit from metal chassis frame 1004. Insulating barrier 1018 is provided on a rear face of third substrate 1010, and insulates third substrate 1010 used for shortening the insulating distance. Tubular cut powder barrier 1022 prevents metal cut powder generated by screwing a tapping screw used for connecting stand 1020 to the display unit from attaching nearby substrate. Screw 1024 attaches first substrate 1006 to metal chassis frame 1004. Third protection mechanism (clamper) 1026 retains wiring inside the display unit.

In this structure, aforementioned first retention mechanism (side bracket) 1012, second retention mechanism (AC bracket) 1014, protection mechanism (wire barrier) 1016, insulating barrier 1018, cut powder barrier 1022, screw 1024, and third retention mechanism (clamper) 1026 need to be configured separately from metal chassis frame 1004. Accordingly, manufacturing time and manufacturing cost are required for each component.

### [Citation List]

### [Patent Literature]

[PTL 1] Japanese Utility Model No. 3108915

### SUMMARY OF THE INVENTION

A display unit of the present invention includes a display panel, a chassis frame, a substrate, and a metal fitting. The display panel displays images. The chassis frame is formed of resin, and is disposed on a rear face of the display panel. The substrate is configured on a rear face of the chassis frame, and a range of circuits are disposed on the substrate. The metal fitting is formed of metal, and covers a part of the chassis frame. The chassis frame and the metal fitting fix the display panel.

With this structure, adoption of the resin chassis frame and the metal fitting that covers a part of the resin chassis frame, instead of a conventional metal chassis frame, maintains safety and durability, and also enables slimming, lighter weight, and cost reduction.

More specifically, the metal fitting has a shape and size minimally required for retaining the physical strength of display unit, i.e., safety performance and electrical performance. Parts other than the metal fitting are formed of the resin chassis frame. As a result, the safety and durability can be maintained. At the same time, adoption of the resin chassis frame lighter than a thin metal chassis eliminates the need to provide an insulating space. Accordingly, design flexibility improves by the use of the light resin chassis, which in turn reduces costs.

Still more, the display unit of the present invention includes a stand for installing the display unit. A part of the stand, the chassis frame, the metal fitting, and a metal plate provided on the display panel may be fixed together with a metal component.

This structure solves a disadvantage of degradation of the resin chassis frame due to aging even if the chassis frame is attached to the stand. Accordingly, safety and durability can be maintained, and also sliming, weight reduction, and cost reduction become feasible.

Still more, the display unit of the present invention includes a rear metal fitting for installing the display unit on the wall. A part of the rear metal fitting, the chassis frame, the metal fitting, and the metal plate provided on the display panel may be fixed together with the metal component.

This structure solves a disadvantage of degradation of the resin chassis frame due to aging even if the display unit is installed on the wall. Accordingly, the safety and durability can be maintained, and also slimming, weight reduction, and cost reduction become feasible.

Still more, the metal fitting and the substrate may be electrically coupled with metal material in the display unit of the present invention.

This structure can maintain the safety and durability while preventing unwanted radiation generated inside the display unit although the resin chassis frame and the metal fitting for covering a part of the resin chassis frame are adopted instead of the conventional metal chassis frame. In addition, slimming, weight reduction, and cost reduction become feasible.

In addition, a hole is created in the chassis frame of the display unit of the present invention. The plate and the substrate provided on the display panel may be electrically coupled with a metal material through the hole.

With this structure, the safety and durability can be maintained while preventing unwanted irradiation generated inside the display unit, although the resin chassis frame and the metal fitting for covering a part of the resin chassis frame are adopted instead of the conventional metal chassis frame. In addition, slimming, weight reduction, and cost reduction become feasible.

The chassis frame of the display unit of the present invention includes a first retention mechanism. The first retention mechanism may be a portion of the chassis frame and being in a shape for retaining a terminal connecting the display unit and external equipment.

With this structure, there is no need to provide an additional retention mechanism for retaining the terminal for connecting the display unit and external equipment.

The chassis frame of the display unit of the present invention includes a second retention mechanism. The second retention mechanism may be a portion of the chassis frame and being in a shape for retaining an input power cord of the display unit.

With this structure, there is no need to provide an additional retention mechanism for retaining the input power cord of the display unit. Accordingly, the costs can be reduced.

Still more, the chassis frame of the display unit of the present invention includes a fixing mechanism. The fixing mechanism may be a portion of the chassis and being in a shape for fixing a component inside the display unit with a claw structure.

With this structure, there is no need to provide an additional fixing mechanism for fixing the component inside the display unit. Accordingly, the costs can be reduced.

Still more, the chassis frame of the display unit of the present invention includes a storage mechanism. This storage mechanism may be a portion of the chassis frame and being in a shape for storing cut powder that is generated on fixing a component inside the equipment with a screw.

With this structure, cut powder that is generated by screwing is prevented from attaching a circuit disposed on the substrate in the manufacture of the display unit.

### EFFECT OF THE INVENTION

The present invention offers a display unit that enables slimming, weight reduction, and cost reduction while maintaining the safety and durability.

### BRIEF DESCRIPTION OF DRAWINGS

Fig. 1 is an exploded perspective view of a structure of a display unit of the present invention.
Fig. 2 is a detailed exploded perspective view of the structure of the display unit of the present invention.
Fig. 3 is a perspective view seen from the back of the display unit of the present invention.
Fig. 4 is a perspective view of a structure of a resin chassis frame and a metal fitting of the present invention.
Fig. 5 is a perspective view of a conventional display unit.
Fig. 6 is a perspective view of the conventional display unit.

### DETAILED DESCRIPTION OF PREFERRED EMBODIMENT

### (First exemplary embodiment)

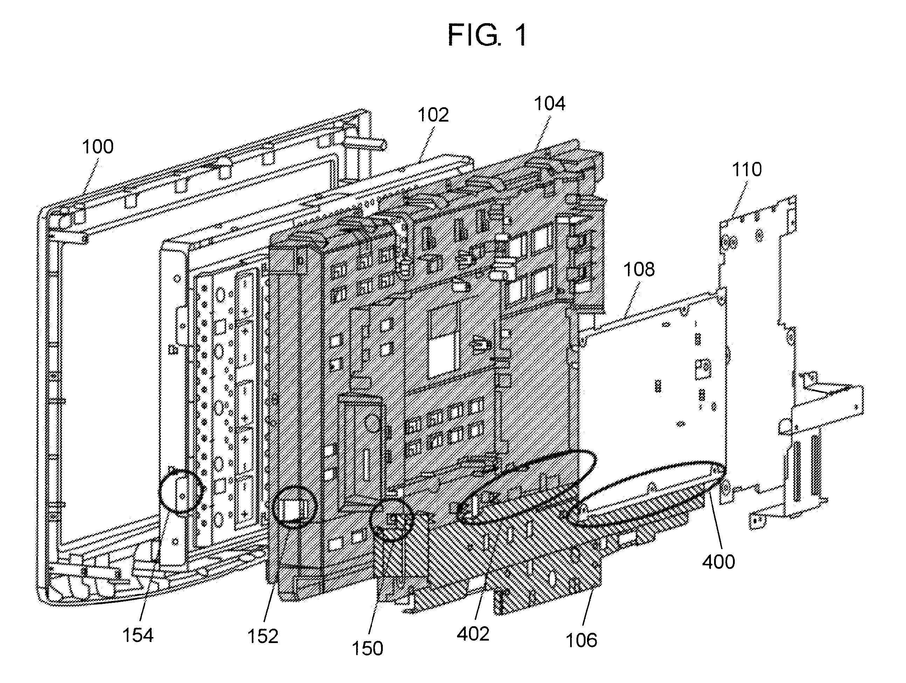

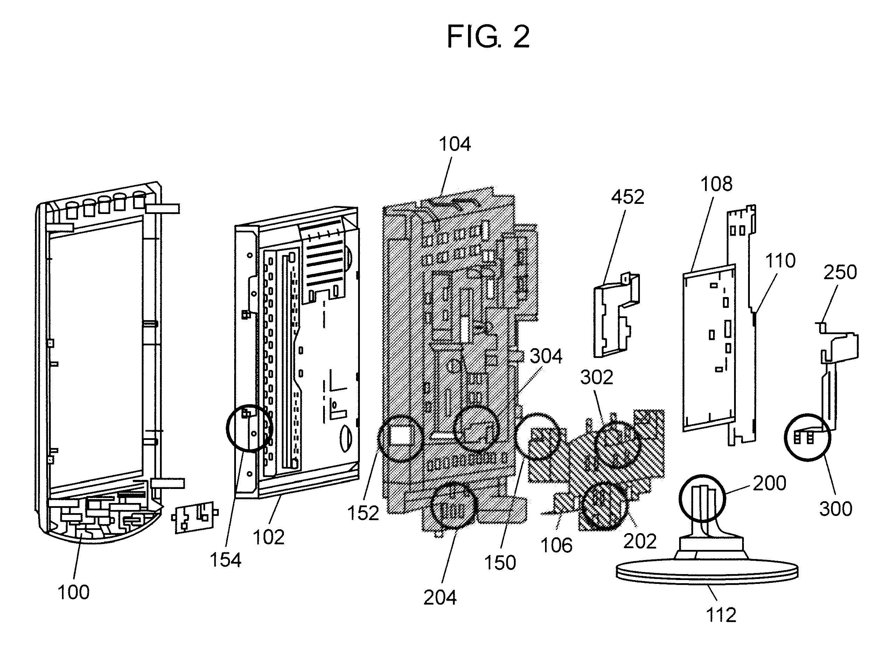

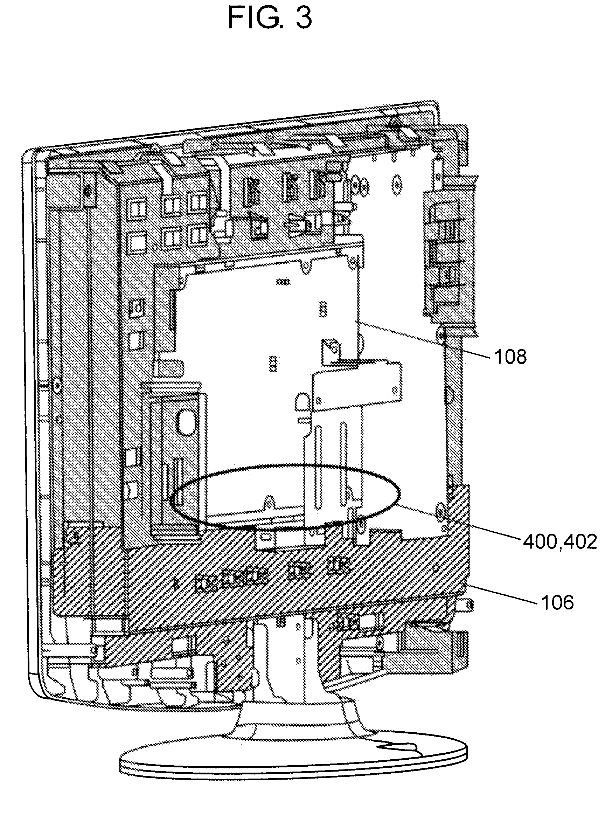

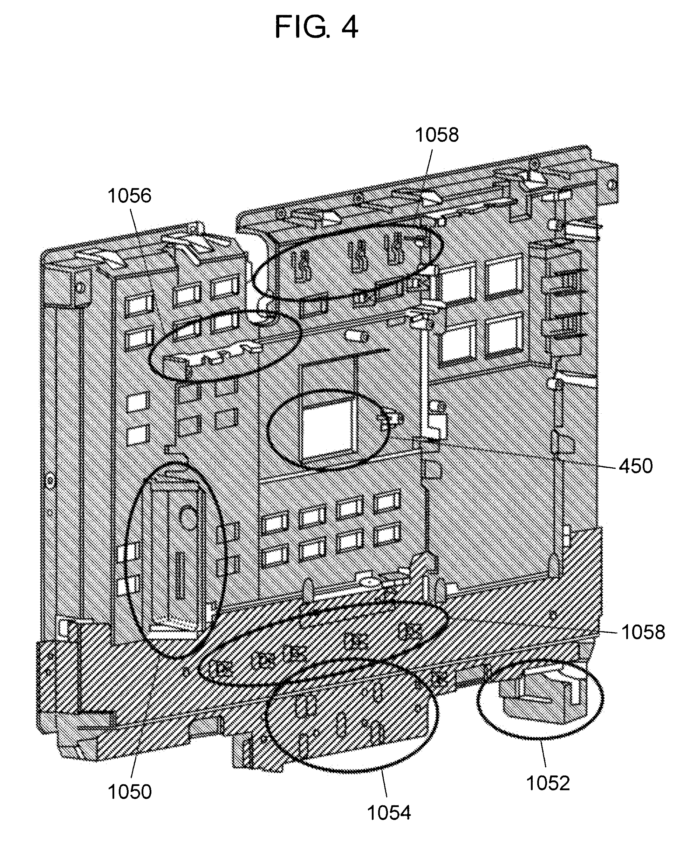

A display unit in the first exemplary embodiment is described with reference to Figs. 1 to 4. Fig. 1 is an exploded perspective view for illustrating a structure of the display unit in a state that a rear cover is detached and structural components are divided into multiple layers. Fig. 2 is a further detailed exploded perspective view for clarifying a structure of each layer in the exploded perspective view of Fig. 1. Fig. 3 is a perspective view seen from the back of the structure of the display unit in the state that the rear cover is detached when the display unit shown in Figs. 1 and 2 is assembled. Fig. 4 is a perspective view illustrating structures of resin chassis frame 104 and metal fitting 106 that are one of characteristics of the present invention.

As shown in Fig. 1, the display unit in the first exemplary embodiment includes display panel 102, resin chassis frame 104 as a chassis frame, metal fitting 106, and first substrate 108 and second substrate 110 as substrates. The display unit is equipped with cabinet 100 disposed on the frontmost face of the display unit for protecting the display unit. Display panel 102 is disposed on a rear face of cabinet 100, and displays an image. Resin chassis frame 104 formed of resin is disposed on a rear face of display panel 102 to fix display panel 102. Metal fitting 106 formed of metal is disposed on the rear face of resin chassis frame 104, and covers a part of resin chassis frame 104. First substrate 108 and second substrate 110 are disposed on the rear face of resin chassis frame 104, and include multiple circuits.

The display unit in the first exemplary embodiment refers to the structure of disposing multiple substrates. However, the present invention is not limited to multiple substrates. A structure of disposing a single substrate may also be adopted. In addition, metal fitting 106 is formed at a lower part of resin chassis frame 104 for connecting stand 112, which is described later, in the display unit in the first exemplary embodiment. However, the present invention is not limited to this structure. Metal fitting 106 may be disposed at an upper part or near the center of resin chassis frame 104 as required.

Next, connection of each component in the display unit is described with reference to Figs. 1 and 2.

First is described connection of display panel 102 and metal fitting 106. As shown in Fig. 1, attachment 150 is provided on metal fitting 106. This attachment 150 is coupled to attachment 154 of display panel 102 through hole 152 created in resin chassis frame 104. In the same way, although not illustrated in the drawings, metal fitting 106 and display panel 102 are coupled also on the opposite side. In the display unit in this exemplary embodiment, metal fitting 106 and display panel 102 are coupled at two points. However, the present invention is not limited to this structure. Depending on the size or other factor of display panel 102, the display unit may be coupled at more than two points.

With this structure, display panel 102 can be reliably held because display panel 102 and metal fitting 106 are electrically coupled with metal material, although resin chassis frame 104 is degraded due to aging and becomes incapable of sufficiently holding display panel 102.

Next is described connection of stand 112 and display panel 102, with reference to Fig. 2, when the display unit is installed on a flat surface. As shown in Fig. 2, attachment 200 is provided on stand 112. This attachment 200 is electrically coupled to attachment 202 provided on metal fitting 106 with a metal material. Then, as described above, attachment 150 is provided on metal fitting 106. This attachment 150 is coupled to attachment 154 of display panel 102 through hole 152 of resin chassis frame 104. As a result, attachment 200 provided on stand 112 and attachment 202 of metal fitting 106 are electrically coupled with metal material. In addition, attachment 202 provided on metal fitting 106 is connected to attachment 204 of resin chassis frame 104. Furthermore, attachment 150 of metal fitting 106 and attachment 154 of display panel 102 are electrically coupled with metal material.

As described above, the display unit in this exemplary embodiment is further equipped with stand 112 for installing the display unit. A part of stand 112, resin chassis frame 104, metal fitting 106, and attachment 154 as a plate provided on display panel 102 are fixed together with a metal component.

With this structure, the physical strength and safety can be ensured although the display unit shakes or is loosened, because stand 112 and the metal component inside the display unit are connected. Since display panel 102 is also electrically coupled with metal material, through metal fitting 106, in addition to stand 112 and metal fitting 106, further higher strength can be ensured.

Next is described, with reference to Fig. 2, connection of rear metal fitting 250 and display panel 102 when the display unit is installed on a wall face. As shown in Fig. 2, attachment 300 is provided on rear metal fitting 250. This attachment 300 is electrically coupled to attachment 302 provided on metal fitting 106 with metal material, and then connected to attachment 304 of resin chassis frame 104. Rear metal fitting 250 is a component that allows installation of the display unit on the wall face by fixing the display unit onto a wall metal fitting (not illustrated) with a screw when the display unit is attached to the wall metal fitting provided on the wall face. Accordingly, this component is normally configured with material with less aging degradation, typically metal.

As described above, attachment 150 is provided on metal fitting 106. This attachment 150 is connected to attachment 154 of display panel 102 through hole 152 in resin chassis frame 104. Accordingly, attachment 300 provided on rear metal fitting 250 and attachment 302 of metal fitting 106 are electrically coupled with metal material. In addition, attachment 150 of metal fitting 106 and attachment 154 of display panel 102 are electrically coupled with metal material.

As described above, the display unit in this exemplary embodiment further includes rear metal fitting 250 for installing the display unit on the wall face. A part of rear metal fitting 250, resin chassis frame 104, metal fitting 106, and attachment 154 as a metal plate provided on display panel 102 are fixed together with a metal component.

Since rear metal fitting 250 is connected to the metal component inside the display unit, this structure can ensure the physical strength and safety although resin chassis frame 104 degrades due to aging.

With the above structure of adopting resin chassis frame 104 and metal fitting 106 that covers a part of resin chassis frame 104, instead of the conventional metal chassis frame, the display unit in this exemplary embodiment of the present invention enables to maintain the safety and durability. At the same time, slimming, lighter weight, and cost reduction become feasible. In other words, metal fitting 106 has a minimum-required shape and size for maintaining the physical strength of display unit, i.e., safety performance. Other parts are formed of resin chassis frame 104. Accordingly, the safety and durability can be maintained, and also no insulating space is needed. Still more, adoption of resin chassis frame 104 lighter than a thin metal chassis improves design flexibility of resin chassis frame 104, which in turn reduces costs.

The structure of the display unit in this exemplary embodiment of the present invention enables to maintain the safety and durability also in the case of connection to stand 112. At the same time, slimming, lighter weight, and cost reduction become feasible. Still more, this structure maintains the safety and durability, and also enables slimming, lighter weight, and cost reduction also in the case of installing the display unit on the wall face.

As described above, the display unit of the present invention adopts resin chassis frame 104 instead of the metal chassis frame. Accordingly, first substrate 108 and second substrate 110 cannot be electrically coupled to resin chassis frame 104 with metal material. Therefore, a different measure is needed to prevent unwanted radiation generated from first substrate 108 or second substrate 110. A measure against unwanted radiation in the display unit of the present invention is described below with reference to Figs. 1, 3, and 4.

As shown in Figs. 1 and 3, attachment 400 is provided on a bottom end of first substrate 108. Attachment 402 is also provided on an upper end of metal fitting 106. Solder is applied to around attachment 400 provided on the bottom end of first substrate 108. Then, attachment 400 and attachment 402 provided on the upper end of metal fitting 106 are fixed with a screw.

In this structure, first substrate 108 and metal fitting 106 are electrically coupled with metal material. Accordingly, unwanted radiation generated from first substrate 108 is preventable. This exemplary embodiment refers to unwanted radiation generated from first substrate 108. However, the present invention is not limited to the first substrate. The same structure may be designed for all substrates disposed inside the display unit (e.g., second substrate 110 in Fig. 1).

Next is described another measure against unwanted radiation with reference to Fig. 4. As shown in Fig. 4, hole 450 is provided on resin chassis frame 104. As shown in Fig. 2, shielding case 452 is provided on a rear face of first substrate 108. In the display unit of the present invention, shielding case 452 is electrically coupled with a metal plate portion (not illustrated) of display panel 102 through hole 450. With this structure, unwanted radiation generated from first substrate 108 is preventable because first substrate 108 and the metal plate portion of display panel 102 are electrically coupled with metal material.

In the above measure against unwanted radiation refers to the case of first substrate 108. However, the present invention is not limited to the first substrate. A measure against unwanted radiation is applicable also to second substrate 110 as required.

The aforementioned measure prevents unwanted radiation by electrically coupling to other component using metal material. However, in the display unit of the present invention, for example, a driving circuit is concentrated on one side of display panel 102 (the left side of display panel 102 in Fig. 1). Accordingly, the driving circuit and first substrate 108 or second substrate 110 may be disposed such that they are not overlaid in order to prevent any influence of unwanted radiation generated from this driving circuit on first substrate 108 or second substrate 110. This provides a distance between the driving circuit and first substrate 108 or second substrate 108. An influence of unwanted radiation can thus be weakened.

If display panel 102 is small, it is difficult to dispose the driving circuit and first substrate 108 or second substrate 110 without being overlaid. Only in this case, a measure typically to cover the driving circuit with a metal casing is also applicable.

In the display unit in this exemplary embodiment, manufacturing time and manufacturing costs of each component can be reduced by integrating each of aforementioned components with resin chassis frame 104, as shown in Fig. 4.

More specifically, first retention mechanism 1050, second retention mechanism 1052, storage mechanism 1054, fixing mechanism 1056, and third retention mechanism 1058 are integrally molded with resin chassis frame 104 in Fig. 4. First retention mechanism 1050 retains a terminal for connecting to external equipment. In other words, resin chassis frame 104 is equipped with first retention mechanism 1050. First retention mechanism has a shape, which is a portion of resin chassis frame 104, for retaining a terminal connecting the display unit and external equipment. Second retention mechanism 1052 retains a power cord for input power source of the display unit. Resin chassis frame 104 is equipped with second retention mechanism 1052. Second retention mechanism 1052 has a shape, which is a portion of resin chassis frame 104, for retaining the input power cord of the display unit. Storage mechanism 1054 stores cut powder generated at fixing component inside the display unit using screws. In other words, resin chassis frame 104 is equipped with storage mechanism 1054. Storage mechanism 1054 has a shape, which is a portion of resin chassis frame 104, for storing cut powder generated at fixing components inside the display unit using screws. Fixing mechanism 1056 fixes components (e.g., substrates) inside the display unit with its claw structure. In other words, resin chassis frame 104 is equipped with fixing mechanism 1056. Fixing mechanism 1056 has a shape, which is a portion of resin chassis frame 104, for fixing the components inside the display unit with its claw structure. Third retention mechanism 1058 retains wiring inside the display unit.

With respect to a protection mechanism (line barrier), the present invention eliminates the need to provide this protection mechanism because the chassis frame is not formed of metal. With respect to an insulating barrier, resin chassis frame 104 can function as the insulating barrier. Accordingly, there is no need to provide this insulating barrier.

With the above structure, the display unit in this exemplary embodiment eliminates the need to provide an additional retention mechanism for retaining a terminal for connecting the display unit and external equipment. Accordingly, costs can be reduced. Still more, the structure of the display unit in this exemplary embodiment eliminates the need to provide an additional retention mechanism for retaining the input power cord of the display unit. Accordingly, costs can be reduced.

Still more, the structure of the display unit in this exemplary embodiment eliminates the need to provide an additional protection mechanism for protecting wiring that connects components inside the display unit. Accordingly, costs can be reduced. Still more, the structure of the display unit in this exemplary embodiment eliminates the need to provide an additional fixing mechanism for fixing components inside the display unit. Accordingly, costs can be reduced. Still more, the structure of the display unit in this exemplary embodiment can prevent cut powder generated by screwing from attaching circuits disposed on substrate in the manufacture of the display unit. Furthermore, the structure of the display unit in this exemplary embodiment eliminates the need to provide an additional retention mechanism for retaining wiring inside the display unit. Accordingly, costs can be reduced.

### INDUSTRIAL APPLICABILITY

The present invention relates to the display unit for displaying images, and also the mechanisms of the display unit. In particular, the present invention is applicable to a resin chassis frame formed of resin and installed on the rear face of the panel.

### REFERENCE MARKS IN THE DRAWINGS

- 100: Cabinet
- 102: Display panel
- 104: Resin chassis frame
- 106: Metal fitting
- 108: First substrate
- 110: Second substrate
- 112: Stand
- 150: Attachment
- 152: Hole
- 154: Attachment
- 200: Attachment
- 202: Attachment
- 204: Attachment
- 250: Rear metal fitting
- 300: Attachment
- 302: Attachment
- 304: Attachment
- 400: Attachment
- 402: Attachment
- 450: Hole
- 452: Shielding case
- 1050: First retention mechanism
- 1052: Second retention mechanism
- 1054: Storage mechanism
- 1056: Fixing mechanism
- 1058: Third retention mechanism

## Claims

1. A display unit comprising:
a display panel for displaying an image;
a chassis frame formed of resin and disposed on a rear face of the display panel,
a substrate configured on a rear face of the chassis frame, a plurality of circuits being provided on the substrate; and
a metal fitting formed of metal and covering a part of the chassis frame;
wherein
the display panel is fixed onto the chassis frame and the metal fitting.

2. The display unit of claim 1, further comprising a stand for installing the display unit;
wherein
a part of the stand, and
the chassis frame, the metal fitting, and a metal plate provided on the display panel
are fixed together with a metal component.

3. The display unit of claim 1, further comprising a rear metal fitting for installing the display unit on a wall;
wherein
a part of the rear metal fitting, and
the chassis frame, the metal fitting, and a metal plate provided on the display panel
are fixed together with a metal component.

4. The display unit of claim 1,
wherein
the metal fitting and the substrate are electrically coupled with metal material.

5. The display unit of claim 1,
wherein
a hole is provided on the chassis frame, and
a metal plate provided on the display panel and the substrate are electrically coupled with metal material through the hole.

6. The display unit of claim 1,
wherein
the chassis frame has a first retention mechanism, the first retention mechanism being a portion of the chassis frame and being in a shape for retaining a terminal connecting the display device and external equipment.

7. The display unit of claim 1,
wherein
the chassis frame has a second retention mechanism, the second retention mechanisms being a portion of the chassis frame and being in a shape for retaining an input power cord of the display unit.

8. The display unit of claim 1,
wherein
the chassis frame has a fixing mechanism, the fixing mechanism being a portion of the chassis frame and being in a shape for fixing a component inside the display unit with a claw structure.

9. The display unit of claim 1,
wherein
the chassis frame has a storage mechanism, the storage mechanism being a portion of the chassis frame and being in a shape for storing cut powder generated at fixing the component inside the display unit with a screw.
